# EUROPEAN PATENT APPLICATION

(11) **EP 1 757 481 A1**
(43) Date of publication of application: **28.02.2007**
(21) Application number: 05018254.2
(22) Date of filing: 23.08.2005
(51) Int. Cl.: B60L 11/18, H02K 53/00

(54) **Wind-driven power generation device for electric vehicle**

(71) Applicant: Chang, Kung-Cheng, Hsinchu (TW)
(72) Inventor: Chang, Kung-Cheng, Hsinchu (TW)
(74) Representative: Casalonga, Axel

(57) **Abstract**

A wind-driven power generation device for electric vehicle comprising of wind-driven power generation module, rectifier and electronic switch, wherein the wind-driven power generation module is installed inside the body of the electric vehicle comprising further of a flat body shell, multiple air channels and multiple small wind-driven power generators installed inside the air channels, when the electric vehicle is moving, the air current entered the multiple air channels will activate the multiple small wind-driven power generators to generate power, the generated electrical power will flow through rectifier and electronic switch to be supplied to the electric engine module of the electric vehicle; moreover, when the power supplied by the wind-driven power generation module is insufficient, it will be supplemented by the power of the battery set, when the power generated by the wind-driven power generation module is too much, the additional power can be sent back and charge the battery set.

## Description

### BACKGROUND OF THE INVENTION

### 1. Field of the invention

This invention relates to the power generation and power supply device for electric vehicle, it more specifically relates to a device which uses the air flow generated during the movement of the electric vehicle to generate electric power, through the wind-driven power generation module of the current invention, for the electric engine module of the electric vehicle.

### 2. Description of the Related Art

General vehicle has an engine driven by the power generated through the combustion of hydrocarbon compound, however, such vehicle which bases on fuel will not only consume earth' s resources but also emit waste gas which will pollute the environment.

There are basically two kinds of vehicles which does not use fuels, the solar energy vehicle and battery electric vehicle. Whereas solar energy vehicle is not in widespread use due to its limit by the instability of solar energy strength and oversized solar energy power generation panel. Although the battery vehicle can reach a speed of 60-80 kilometers per hour, but the driving time of the vehicle is limited by the limiting total power of the battery, moreover, the battery needs to be charged frequently, this limits its convenience, therefore, it can not be widely accepted by the users.

### SUMMARY OF THE INVENTION

The main purpose of the current invention is to let the electric vehicle generate power during its movement so that the continuous driving of the electric vehicle will not be limited by the capacity of the battery, no more frequent charging is necessary.

The main purpose of the current invention is to install a wind-driven power generation module of flat body shell on the electric vehicle, the wind-driven power generation module comprising of multiple air channels and multiple small wind-driven power generators inside the air channels, when the electric vehicle is in motion, the air current flowing into the multiple air channels will activate the multiple small wind-driven power generators to generate power, the generated electricity will then flow through rectifier and electronic switch to provide electricity for the electric engine module of the electric vehicle; meanwhile, when the wind-driven power generation module does not have enough electricity, it will get the supply from the battery of the electric vehicle, when the electricity of the wind-driven power generation module is full, it can send back the overflow electricity to the battery set. Therefore, through the use of the wind-driven power generation device of the current invention, the electric vehicle can then run continuously without frequent charging; meanwhile, since the power is sufficient, the vehicle can run at its highest speed, this create convenience, fastness, and non-pollution.

### BRIEF DESCRIPTION OF THE DRAWINGS

Figure 1 is the block diagram of the current invention.
Figure 2 is an embodied stereo drawing of the current invention applied in the usage of a vehicle.
Figure 3 is the inner structure illustration of the wind-driven power generation module of the current invention.
Figure 4 is another embodied stereo drawing in usage of the current invention applied at the different locations of a vehicle.
Figure 5 is an embodied stereo drawing in usage of the current invention applied in the motorcycle.

### DETAILED DESCRIPTION OF ILLUSTRATIVE EMBODIMENT

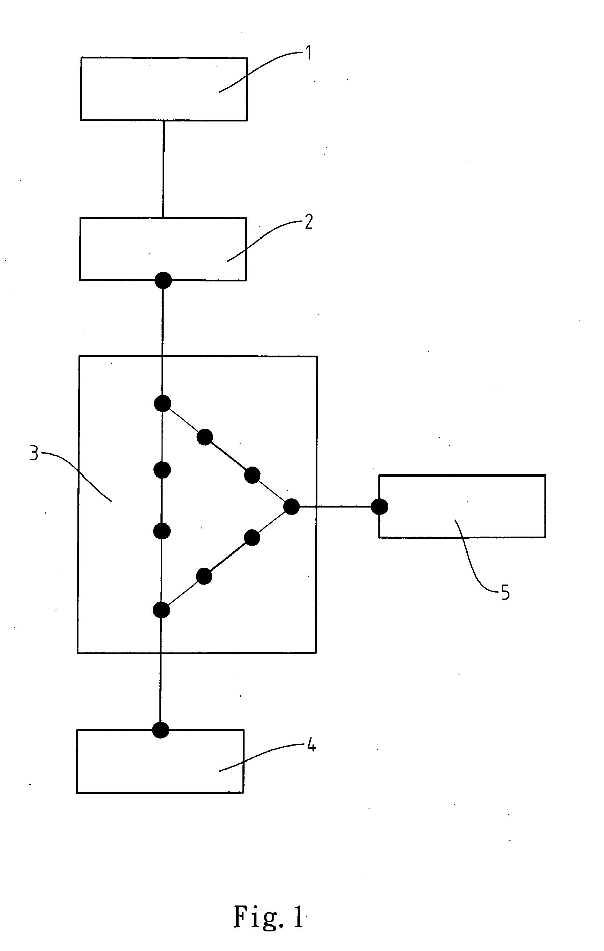

Please refer to figure 1 for the wind-driven power generation device, it comprising of wind-driven power generation module 1, rectifier 2 and electronic switch 3 wherein the electrical power generated by the wind-driven power generation module 1 flows through rectifier 2 to rectify and stabilize its voltage, then it flows through electronic switch 3 to supply the power to electric engine module 4. The electronic circuit of the electronic switch 3 is further connected to the battery set 5 of the electric vehicle, therefore, when the electrical power generated by the wind-driven power generation module 1 is too much, it can be supplied to the battery set 5 through electronic switch 3, that is, it start charging the battery set 5.

When the electric vehicle is started, the starting power needed in the electric engine module 4 is supplied by battery set 5. When the moving speed of the vehicle does not exceed the critical wind speed (about 30-40 kilometers per hour), the power generated by wind-driven power generation module 1 will be insufficient to supply the power required by the electronic engine module 4 of the electric vehicle, the insufficient power needs to be supplied by the battery set 5. But when the moving speed of the electric vehicle exceeds the above-mentioned critical speed, the power generated by the wind-driven power generation module 1 will be sufficient to supply the power required by the electric engine module 4, the battery module 5 is no longer needed to supply power for it; moreover, the wind-driven power generation module 1, in addition to supplying the required power to the electric engine module 4, its additional power can charge the battery set 5 through electronic switch 3 until the battery 5 is full. Therefore, the wind-driven power generation module 1 of the current invention can be used together with the battery set 5 to supply the required power in electric engine module 4 in order to speed up the electric vehicle and increase the time of continuous moving, there is thus no need of frequent charging to the prior art electric vehicle.

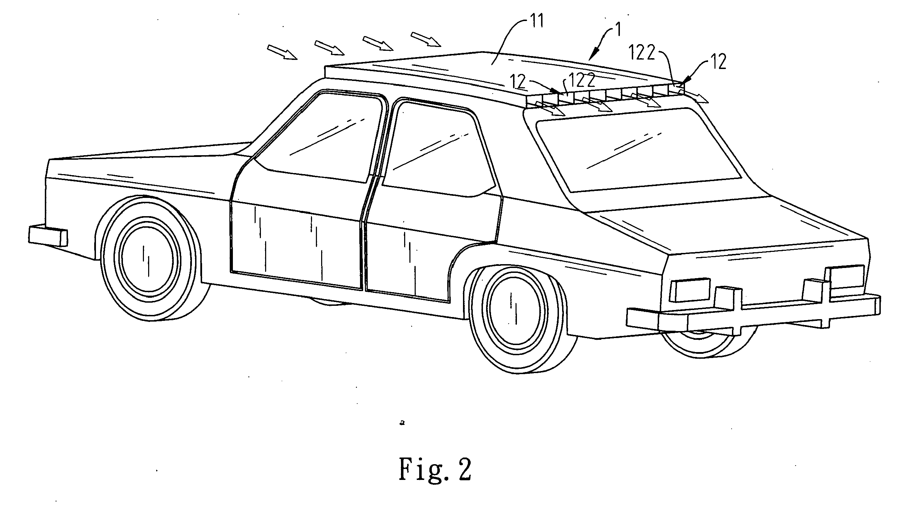

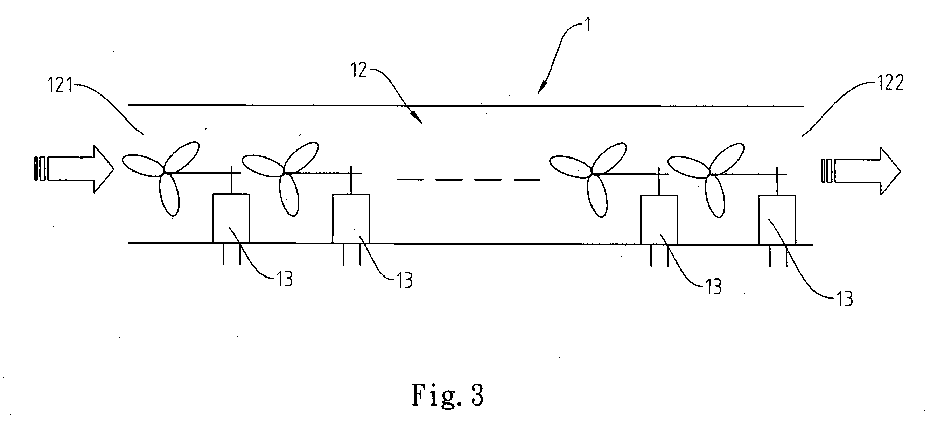

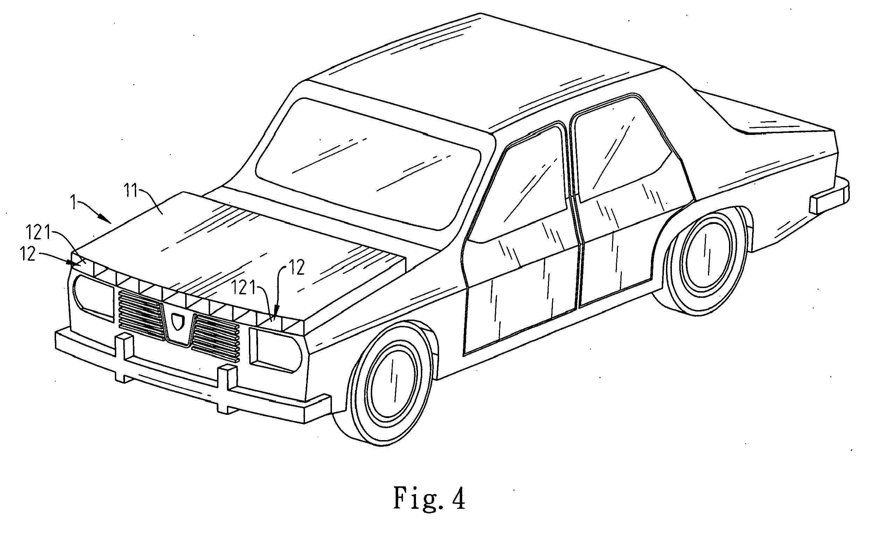

Please refer to figure 2 to figure 4 for the wind-driven power generation module 1 of the current invention, it is installed at the body of the electric vehicle, in figure 2, it is installed at the vehicle top but installed at the vehicle front cover in figure 4, however, these are only two embodiments of the current invention, the wind-driven power generation module 1 can also be installed at other location of the electric vehicle, for example, at the two sides or the bottom of the electric vehicle.

Please refer to figure 2 to figure 4 for the wind-driven power generation module 1 of the current invention, it comprising of a flat body shell 11, multiple air channels 12 and multiple small wind-driven power generators 13 installed inside the air channels 12, the air inlets 121 of the above-mentioned multiple air channels 12 face the head of the electric vehicle, and the air outlets 122 of the multiple air channels 12 face the end of the electric vehicle, through the relatively generated air current ,when the electric vehicle is moving, which enters through the air inlets 121 of the above-mentioned multiple air channels 12 to activate the inner multiple small wind-driven power generators 13.

As shown in figure 1, the electrical power generated by the above-mentioned wind-driven power generation module 1 will then pass rectifier 2 to rectify and stabilize its voltage, then it pass electronic switch 3 to supply power to electric engine module 4 or send the additional electrical power through electronic switch 3 to charge the battery set 5. When the electric vehicle newly starts or when its speed does not reach critical wind speed, the battery 5 can then supply power to the electric engine module 4 through electronic switch 3.

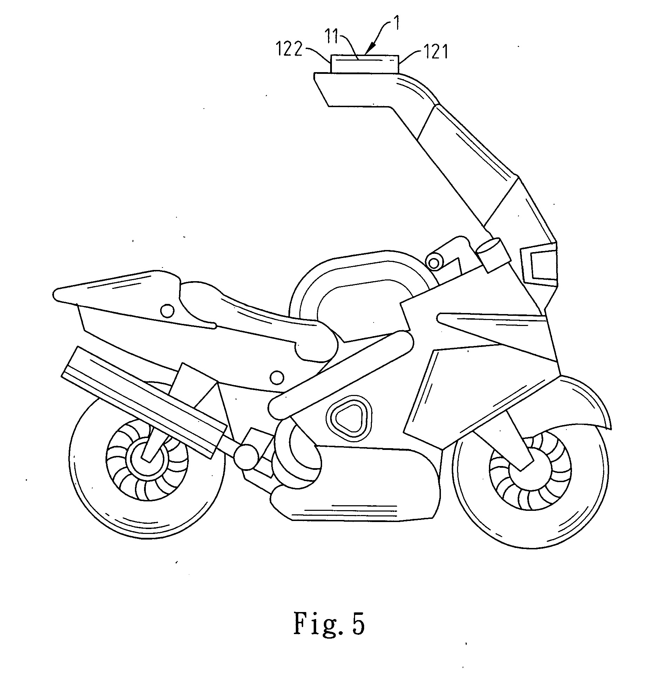

Please refer to figure 5, it takes motorcycle as the embodiment of the electric vehicle. In the figure, the wind-driven power generation module 1 of the current invention is installed at the top of the windshield, it can generate electrical power through the relative air current and wind generated while the vehicle is moving to supply the power required for the moving of the electric vehicle. The embodiment in this figure just change the vehicle from automobile to motorcycle as in figure 2 and figure 4, its way of action and function are all the same as the above-mentioned.

## Claims

1. A wind-driven power generation device for electric vehicle, comprising of wind-driven power generation module and rectifier wherein the wind-driven power generation module is installed inside the electric vehicle body, comprising further a flat body shell, multiple air channels and multiple small wind-driven power generators installed inside the air channels, the air inlets of the above-mentioned multiple air channels face the head of the electric vehicle, air outlets of the multiple air channels face the end of the electric vehicle, when the electric is moving, air flows through the inlets of the above-mentioned air channels, the air current will activate the multiple wind-driven power generators to generate power, the generated electrical power will then flow through a rectifier to the electric engine module of the electric vehicle.

2. The wind-driven power generation device for electric vehicle of claim 1 wherein between the rectifier and the electric engine module is further installed with electronic switch, the electronic circuit of the electronic switch is further connected to the battery set of the electric vehicle, therefore, when the electrical power generated by the wind-driven power generation module is insufficient, the battery set can supply the insufficient power; when the wind-driven power generation module has too much electrical power , the additional electrical power can be sent back and charge the battery set.
